# EUROPÄISCHE PATENTANMELDUNG

(11) **EP 1 364 694 A1**
(43) Veröffentlichungstag der Anmeldung: **26.11.2003**
(21) Anmeldenummer: 03450116.3
(22) Anmeldetag: 12.05.2003
(51) Int. Cl.: B01D 17/02, C02F 1/40, E03F 5/16, B01D 17/028, B01D 17/022, B01D 17/05

(54) **Verfahren und Vorrichtung zum Fettabscheiden**

(30) Priorität: 16.05.2002 AT 7562002
(71) Anmelder: Betonwerk Nageler Gesellschaft m.b.H., 9900 Lienz (AT)
(72) Erfinder: Ofner, Hubert, Ing., 8413 St. Georgen (AT)
(74) Vertreter: Hehenberger, Reinhard, Dipl.-Ing., Patentanwalt

(57) **Zusammenfassung**

Zum Abtrennen von Fett und fetthaltigen Stoffen aus vorgereinigtem Abwasser wird in einer Zone zum Abtrennen von Fett oder fetthaltigen Stoffen der pH-Wert des Abwassers in den sauren Bereich, also unter pH 7, eingestellt. Dabei bildet sich in dieser Zone unten eine Schlammschicht (29), oben eine Schicht fetthaltiger Teilchen (31) und dazwischen eine Reaktionszone (30) aus. Die Zone zum Abtrennen von Fett ist in zwei Bereiche (28 und 33) unterteilt, zwischen denen im Bereich der Reaktionszone (30) eine schräg nach oben gerichtete Strömung von Abwasser ausgebildet wird. Gereinigtes Abwasser wird aus dem Bereich (33) der Fettabscheidezone von einem unterhalb der Fettschicht (31) liegenden Punkt in einer nach oben gerichteten Strömung abgezogen.

## Beschreibung

Die Erfindung betrifft ein Verfahren und eine Vorrichtung zum Abtrennen von Fett aus Abwasser, insbesondere aus Abwasser, das aus Küchen stammt und in dem Speisereste, Fett usw. enthalten sind.

Beispielsweise Küchenabwässer enthalten in wechselnden Anteilen unter anderem Speisereste, Fette und Spülmittel (oberflächenaktive Substanzen) und müssen vor Einleitung in die Kanalisation oder in Kläranlagen mit dem Ziel gereinigt werden, insbesondere den Fettgehalt zu verkleinern. Hiezu sind aus der Ö-Norm B5103 Fettabscheider bekannt, die neben einer Absetzkammer, in der nicht aufschwimmende Feststoffe durch Absetzen aus den Abwässern abgetrennt werden, eine Fettabscheidekammer enthalten, in der Fette (fest oder flüssig) aufschwimmen.

Problematisch bei den bekannten Fettabscheideanlagen entsprechend der Ö-Norm B5103 ist es, dass die für das Einleiten in Kläranlagen oft geforderte Obergrenze von 100 mg schwerflüchtiger, lipophiler Stoffe (also im wesentlichen Fette) je Liter Abwasser nicht ohne weiteres eingehalten werden kann.

Aus der EP 0 586 107 A ist es bekannt, eine bei Erdölquellen anfallende Flüssigkeit, die Wasser, Öl und mehr als 100 ppm wasserlösliche Petroleum-Carboxylate in anionischer Form enthält, dadurch zu behandeln, dass der pH-Wert mit einer Säure auf einen Wert unter 6,0 eingestellt wird und dann heftig gemischt wird. Öl und Wasser sollen so voneinander getrennt werden. Bei dem bekannten Verfahren wird Wasser stets von unten aus einem Mischbehälter abgezogen.

Aus der DE 41 03 349 A ist ein Abscheider für Leichtflüssigkeiten mit einem Behälter mit zwei Kammern, mit einem Zulauf in die erste Kammer, mit einem Ablauf aus der zweiten Kammer und mit einem zwischen den Kammern angeordneten Schrägklärer aus mehreren zur lotrechten, schräggestellten Platten bekannt.

Der Erfindung liegt die Aufgabe zu Grunde, ein Verfahren und eine Vorrichtung zum Abscheiden von Fett vorzustellen, mit dem die Menge an Fett im Abwasser so weit abgesenkt werden kann, dass es problemlos, in üblicher Weise, z.B. durch Einleiten in die Kanalisation und Behandeln in einer Kläranlage entsorgt werden kann.

Gelöst wird diese Aufgabe, was das Verfahren anlangt, mit einem Verfahren, bei dem in einer Zone zur Abtrennung von Fett oder fetthaltigen Stoffen ein pH-Wert des Abwassers im sauren Bereich, also kleiner als pH 7, eingehalten wird, und bei dem in dieser Zone unten eine Schlammschicht, oben eine Schicht fetthaltiger Teilchen und dazwischen eine Reaktionszone ausgebildet wird, wobei Abwasser, aus dem Fett abgeschieden worden ist, aus dem Bereich der Reaktionszone abgezogen wird.

Bevorzugte und vorteilhafte Ausgestaltungen des erfindungsgemäßen Verfahrens sind Gegenstand der vom Verfahrenshauptanspruch abhängigen Unteransprüche.

Die Erfindung betrifft auch eine Vorrichtung zum Durchführen des erfindungsgemäßen Verfahrens mit einem Behälter mit zwei Kammern, mit einem Zulauf in die erste Kammer, mit einem Ablauf aus der zweiten Kammer und mit einem zwischen den Kammern angeordneten Schrägklärer aus mehreren zur lotrechten, schräggestellten Platten kann. Eine solche Vorrichtung ist aus der DE 41 03 349 A bekannt.

Die Vorrichtung gemäß der Erfindung ist dadurch ausgezeichnet, dass der Eintritt von Abwasser aus der ersten Kammer in den Schrägklärer am unteren Ende desselben angeordnet ist, dass der Austritt aus dem Schrägklärer in die zweite Kammer am oberen Ende desselben angeordnet ist, und dass der Schrägklärer zwischen einer im Behälter von oben nach unten ragenden, die Kammern voneinander trennenden Wand und einer im Behälter von unten nach oben ragenden Wand, welche die Kammern voneinander trennt, angeordnet ist.

Bevorzugte und vorteilhafte Ausgestaltungen der erfindungsgemäßen Vorrichtung sind Gegenstand der vom Vorrichtungshauptanspruch abhängigen Unteransprüche.

Bei dem erfindungsgemäßen Verfahren wird bevorzugt nach einer (Grob-) Fettabscheidung, z.B. gemäß Ö-Norm B5103, eine (Rest-)Fettabscheidung durchgeführt. Wesentliches Merkmal der erfindungsgemäßen (Rest-)Fettabscheidung ist es, dass durch Einstellen des pH-Wertes in den sauren Bereich im Abwasser eine Trennung in im wesentlichen drei Schichten stattfindet, u.zw. in eine Schlammschicht (unten), eine Fettschicht (oben) und dazwischen eine Reaktionszone, in der (dem) eine Trennung in zur Fettschicht aufschwimmende Teilchen und in zur Schlammschicht absinkende Teilchen stattfindet.

Diese Auftrennung in drei Schichten erlaubt es, die (Rest-)Fettabscheidung beispielsweise so auszuführen, dass genügend Verweilzeit zur Verfügung gestellt wird, dass in der Reaktionszone enthaltene Anteile an Feinteilchen der Schlammschicht und/oder Feinteilchen der Fettschicht Zeit haben sich abzusetzen bzw. aufzuschwimmen und sich gegebenenfalls zu größeren Aggregaten zusammenzuballen, so dass deren Abtrennung leichter und rascher möglich ist.

Dabei kann bevorzugt so vorgegangen werden, dass vor dem Abziehen von Abwasser aus der Fettabscheidungszone die Strömung in mehrere Teilströme aufgeteilt wird, in denen die Teilchenagglomeration, also das Zusammenballen von Teilchen der Fettschicht oder der Schlammschicht, zu größeren Einheiten erfolgen kann, erfolgt.

Das Einstellen des in der (Rest-)Fettabscheidezone erfindungsgemäß eingehaltenen pH-Wertes kann durch eine entsprechend lange Verweilzeit des Abwassers in dieser Zone und/oder durch Zudosieren von den pH-Wert senkenden Mitteln (z.B. Säuren u. dgl.) erfolgen.

In einer Ausführungsform der Erfindung werden in einer ersten Stufe, z.B. in einem Fettabscheider gemäß Ö-Norm B5103 oder einem Grobstoffabscheider, leicht aufschwimmbare Fette einerseits und/oder absetzbare Reststoffe (beispielsweise Speisereste u.dgl.) anderseits abgetrennt, also eine Grobreinigung ausgeführt. In einer zweiten Stufe, in der das Abwasser, das aus der ersten Stufe austritt, und in welchem die Fette zum überwiegenden Teil emulgiert vorliegen, aufgegeben wird, erfolgt eine Feinreinigung, also eine (Rest-)Fettabscheidung, bei der unter Einhalten der erforderlichen Verweilzeit der pH-Wert im Abwasser auf einen pH-Wert unter 7, also im sauren Bereich, vorzugsweise auf einen pH-Wert zwischen 4 und 5 eingestellt wird, so dass eine Fällung erfolgt - und sich im Bereich der (Rest-)Fettabscheider drei Schichten ausbilden, nämlich eine Schicht mit aufschwimmenden, Fettanteilen, einer Reaktionszone und einer Schicht, die einen feinteiligen, absinkenden Schlamm enthält, der auch fetthaltig sein kann.

Eine Vorrichtung zum Durchführen des Verfahrens besitzt in einer bevorzugten Ausführungsform einen Fett- oder Grobabscheider, beispielsweise einen Fettabscheider gemäß Ö-Norm B5103, und diesem nachgeschaltet einen (Rest-)Fettabscheider, der eine in zwei Abschnitte unterteilte Kammer aufweist (oder zwei in getrennten Behältern untergebrachte Kammern), die miteinander durch einen Schrägklärer verbunden sind. Dabei strömt Abwasser, das in den (Rest-)Fettabscheider eintritt, von unten nach oben durch den Schrägklärer, der beispielsweise durch wenigstens ein Paket aus mehreren Platten (aus Kunststoff) gebildet ist, nach oben und dann zu einem Ablauf, der in Form eines Tauchrohres ausgebildet ist. Dabei setzen sich Feststoffe in Form eines feinen, fetthaltigen Schlammes ("untere Schicht") im Bereich vor dem Schrägklärer im Bereich des Bodens ab und es bildet sich an der Oberfläche des Wasserkörpers im (Rest-)Fettabscheider schwimmend eine Fettschicht aus ("obere Schicht"). Dazwischen liegt die "Reaktionszone". Beim Durchtritt durch den Schrägklärer wird eine weitere Trennung von zur unteren Schicht absinken und zur oberen Schicht aufschwimmenden Teilchen dadurch unterstützt, dass sich Teilchen an der Ober- bzw. an der Unterseite der Platten des Schrägklärers anlagern und zu größeren Einheiten zusammenballen (agglomerieren), so dass deren Absetzen und deren Aufschwimmen, je nachdem ob es sich um Schlammteilchen oder Fettteilchen handelt, in vernünftigen Zeiträumen möglich ist. Nach dem Durchtritt durch den Schrägklärer tritt Abwasser nach einer nach unten gerichteten Strömung in das Tauchrohr des Ablaufes ein und strömt aus dem (Rest-)Fettabscheider aus.

Weitere Einzelheiten, Merkmale und Vorteile der Erfindung ergeben sich aus der nachstehenden Beschreibung eines bevorzugten Ausführungsbeispieles an Hand der Zeichnungen.

Es zeigt:
Fig. 1 im Schnitt längs der Linie I-I in Fig. 2 einen Fettabscheider bekannter Bauart,
Fig. 2 im Horizontalschnitt den (Grob-)Fettabscheider aus Fig. 1,
Fig. 3 im Vertikalschnitt einen (Rest-)Fettabscheider gemäß der Erfindung und
Fig. 4 im Horizontalschnitt den Fettabscheider aus Fig. 3.

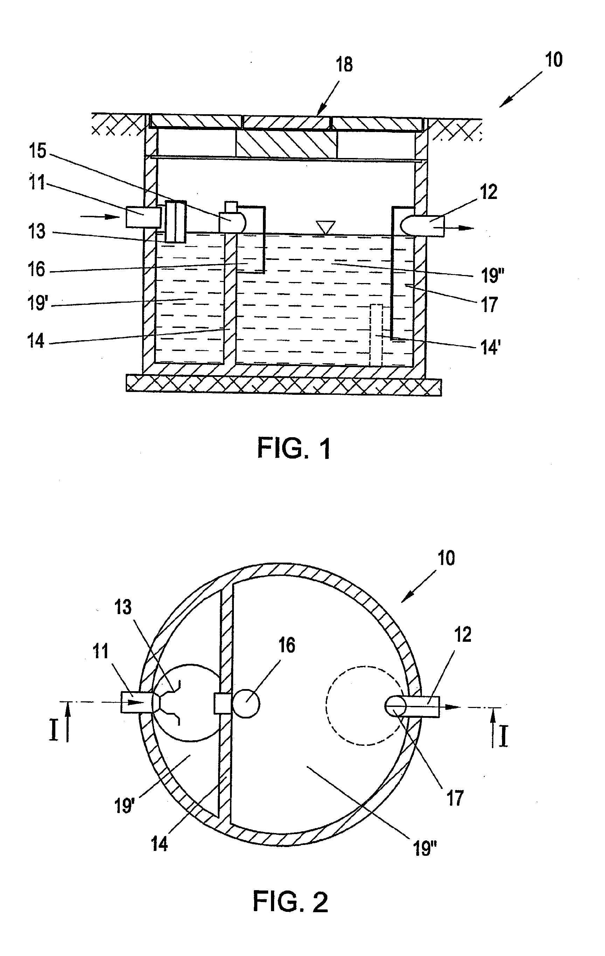

Die in den Fig. 1 bis 4 als nicht beschränkendes Ausführungsbeispiel gezeigte und im Nachstehenden beschriebene Anlage besitzt als wesentliche Bauteile einen (Grob-)Fettabscheider 10 und einen (Rest-) Fettabscheider 20, wobei im gezeigten Ausführungsbeispiel der (Grob-) Fettabscheider 10 eine an sich bekannte Ausführungsform besitzt.

Der (Grob-)Fettabscheider 10 besitzt gemäß den Fig. 1 und 2 ein Gehäuse mit Zulauf 11 und Ablauf 12, wobei nach dem Zulauf 11 ein Strömungsverteilungsblech 13 vorgesehen ist. Zwischen Zulauf 11 und Ablauf 12 ist im gezeigten Ausführungsbeispiel eine Zwischenwand 14 vorgesehen, in der oben eine Überlauföffnung 15 vorgesehen ist, die zu einem Tauchrohr 16 führt. Abwasser strömt aus dem (Grob-)Fettabscheider 10 durch den Ablauf 12 ab, dem ein Tauchrohr 17 vorgeschaltet ist, dessen freies Ende bis in die Nähe des Bodens des Gehäuses des (Grob-)Fettabscheiders 10 reicht.

Die Zwischenwand 14 kann in bestimmten Fällen auch weggelassen werden bzw. durch eine niedrigere Wand in der Nähe des Ablaufes 12 ersetzt werden, wie dies strichliert in Fig. 1 für eine Wand 14' angedeutet ist.

Der (Grob-)Fettabscheider 10 ist oben durch einen Deckel 18 verschlossen und beispielsweise ins Erdreich versenkt aufgestellt.

Es ist nicht zwingend, dass die Absetzkammer 19', in der sich unten leicht absetzbare Feststoffe sammeln, und die Fettabscheidekammer 19", in der Fettstoffe und Fette aufschwimmen, in einem gemeinsamen Gehäuse untergebracht sind, wie dies in Fig. 1 und 2 gezeigt ist, sondern die Kammern 19', 19" können sich auch in getrennten, hydraulisch miteinander verbundenen Gehäusen befinden.

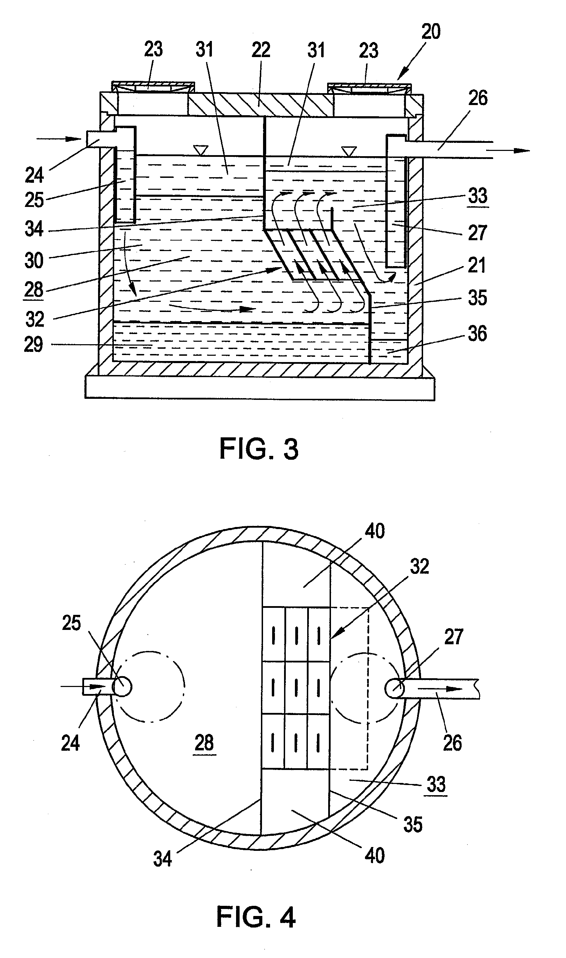

Nach dem Durchtritt durch einen (Rest-)Fettabscheider 20, wie er in Fig. 3 und 4 beispielhaft gezeigt ist und weiter unten in Einzelheiten hinsichtlich Konstruktion und Funktion beschrieben werden wird, gelangt Abwasser entweder durch Gefälle oder durch Pumpen gefördert in ein Kanalsystem oder unmittelbar in eine Kläranlage.

Die in den Fig. 3 und 4 gezeigte Ausführungsform eines (Rest-)Fettabscheider 20 besitzt den nachstehend beschriebenen Aufbau.

In einem Gehäuse 21 mit Deckel 22 und zwei Mannlöchern 23 ist ein Zulauf 24 mit nachgeschaltetem Tauchrohr 25 vorgesehen. Im Gehäuse 21 ist weiters ein Ablauf 26 mit vorgeschaltetem Tauchrohr 27 vorgesehen.

In den (Rest-)Fettabscheider 20 tritt Abwasser, beispielsweise Abwasser, das in einem (Grob-)Fettabscheider 10 gemäß Fig. 1 und 2 vorgereinigt worden ist, durch den Zulauf 24 ein und strömt durch das Tauchrohr 25 in einen ersten Raum 28.

Auf Grund des im (Rest-)Fettabscheider 20 herrschenden, sauren pH-Wertes (z.B. pH 4-5) bilden sich im (Rest-)Fettabscheider 20 drei Schichten aus. Eine Schicht 29 aus sich absetzenden feinen Feststoffen, die fetthaltig sein können, eine Reaktionszone 30, im wesentlichen bestehend aus Abwasser, und einer aufschwimmenden Fettschicht 31.

Aus dem Raum 28 strömt Abwasser durch einen Schrägklärer 32 nach oben in einen Raum 33.

Der Schrägklärer 32 besteht aus wenigstens einem, vorzugsweise aber mehreren Paketen, zueinander parallel ausgerichteter Platten, die zur Lotrechten, wie in Fig. 3 gezeigt, schräggestellt sind. Beispielsweise schließen die Platten des Schrägklärers 32 mit der Lotrechten einen Winkel von etwa 40° ein.

Die Platten jedes Plattenpaares des Schrägklärers 32 haben voneinander beispielsweise einen Abstand von jeweils 5 mm und bestehen aus Kunststoff, insbesondere einem Kunststoff, der lipophile Eigenschaften besitzt.

Nach dem Schrägklärer 32, der zwischen einer Wand 34, die von oben nach unten ragt, und einer Wand 35, die von unten nach oben ragt, angeordnet ist, strömt Wasser durch den Raum 33. Im Raum 33 strömt Wasser nach unten und tritt von unten her in das Tauchrohr 27 ein. Schließlich gelangt Wasser zum Ablauf 26, durch den es aus dem (Rest-)Fettabscheider 20 austritt und beispielsweise durch Gefälle oder durch eine Pumpstation, einer Kanalisation oder einer Kläranlage zugeleitet wird. Zu beiden Seiten des Schrägklärers 32 sind (im wesentlichen horizontale) Wände 40 vorgesehen, die den Raum zwischen den Wänden 34 und 35 und der Wand des Behälters 21 verschließen, so dass Abwasser ausschließlich über den Schrägklärer 32 aus dem Raum 28 in den Raum 33 strömen kann.

Zwischen dem unteren Ende der Wand 35 und der Wand des Gehäuses 21 kann sich noch Schlamm absetzen, wie dies bei 36 in Fig. 3 gezeigt ist.

Beim Durchtritt von Abwasser durch den Schrägklärer 32, der wie in Fig. 3 gezeigt, im Bereich der Reaktionszone 30 angeordnet ist, erfolgt eine weitere Abtrennung von zur Schlammschicht 29 gehörenden Teilchen und/oder von Teilchen, die zur Fettschicht 31 gehören. Diese Abtrennung wird in vorteilhafter Weise dadurch unterstützt, dass sich die Teilchen, die zu der Schlammschicht 29 gehören und/oder Teilchen, die zur Fettschicht 31 gehören, zusammenballen, also größere Teilchen bilden, und dann leichter in die Schlammschicht 29 absinken bzw. zur Fettschicht 31 aufschwimmen. Dieser Effekt des Zusammenballens wird in vorteilhafter Weise durch das Strömen durch die Zwischenräume zwischen den Platten des Schrägklärers 32 unterstützt, da sich absinkende Teilchen, also Teilchen der Schlammschicht 29 an den nach oben weisenden Flächen der Platten absetzen und sich zu größeren Einheiten zusammenballen, einerseits, und dadurch, dass zur Fettschicht 31 gehörende Teilchen an den nach unten weisenden Flächen der Platten des Schrägklärers 32 anliegen und dort ebenfalls nach oben wandern und dabei zu größeren Einheiten zusammenklumpen.

Dieser vorteilhafte Effekt des Schrägklärers 32 wird unterstützt, wenn die Platten desselben einen Abstand voneinander von bis zu 15 mm, vorzugsweise 5 mm, haben und aus lipophilem Werkstoff, z.B. PVC, bestehen.

Die einzelnen Platten des Schrägklärers 32 können zu Paketen zusammengefasst sein, die einzeln entfernbar sind, um sie beispielsweise zu reinigen. Normalerweise genügt eine Reinigung, indem mit Hilfe eines Hochdruckreinigers anhaftende Teilchen von den Platten des Schrägklärers 32 abgereinigt werden. Vorteilhaft bei dem Schrägklärer 32 ist es auch, dass ein Verengen der Strömungskanäle zwischen den Platten keine nachteilige Wirkung hat, da zwar die Strömungsquerschnitte kleiner werden, aber auch die Wege, die aufschwimmende bzw. absinkende Teilchen zurücklegen müssen, bis sie an nach unten bzw. nach oben weisende Flächen der Platten gelangen, kürzer werden.

Vorteilhaft ist es auch, dass bei dem erfindungsgemäßen (Rest-) Fettabscheider 20 Reinigungsintervalle von sechs oder mehr Monaten möglich sind, da der Schrägklärer 32 auch eine gewisse Selbstreinigungswirkung zeigt.

Das aus dem (Rest-)Fettabscheider 20 austretende Abwasser kann durch Mischen mit anderen Abwässern auf den für das Einleiten in Kläranlagen vorteilhaften pH-Wert zwischen 6,5 und 8,5 eingestellt werden.

Vorteilhaft ist es bei der praktischen Verwirklichung des erfindungsgemäßen (Rest-)Fettabscheiders, wenn das Gehäuse 21 des (Rest-)Fettabscheiders 20 mit möglichst großer Grundfläche gebaut ist, so dass das Gehäuse 21 und der im Gehäuse enthaltene Wasserkörper, der eine große Grundfläche, also eine geringe Tiefe aufweist. Diese Ausbildung des Gehäuses des (Rest-)Fettabscheiders 20 kann beispielsweise dadurch erreicht werden, dass das Gehäuse als rechteckiges oder langovales Becken ausgebildet ist. Diese Ausführung mit großer Grundfläche und geringer Tiefe hat den Vorteil, dass die Strömungsgeschwindigkeiten innerhalb des (Rest-)Fettabscheiders 20 abgesenkt werden, so dass die Gefahr, dass Teilchen aus der Schlammschicht 29 und/oder Teilchen aus der Fettschicht 31 ausgewaschen werden, praktisch nicht besteht.

Zusammenfassend kann ein Ausführungsbeispiel der Erfindung wie folgt dargestellt werden:
Zum Abtrennen von Fett und fetthaltigen Stoffen aus vorgereinigtem Abwasser wird in einer Zone zum Abtrennen von Fett oder fetthaltigen Stoffen der pH-Wert des Abwassers in den sauren Bereich, also unter pH 7, eingestellt. Dabei bildet sich in dieser Zone unten eine Schlammschicht 29, oben eine Schicht fetthaltiger Teilchen 31 und dazwischen eine Reaktionszone 30 aus. Die Zone zum Abtrennen von Fett ist in zwei Bereiche 28 und 33 unterteilt, zwischen denen im Bereich der Reaktionszone 30 eine schräg nach oben gerichtete Strömung von Abwasser ausgebildet wird. Gereinigtes Abwasser wird aus dem Bereich 33 der Fettabscheidezone von einem unterhalb der Fettschicht 31 liegenden Punkt in einer nach oben gerichteten Strömung abgezogen.

## Patentansprüche

1. Verfahren zum Abtrennen von Fett und fetthaltigen Stoffen aus Abwasser, **dadurch gekennzeichnet, dass** in einer Zone zur Abtrennung von Fett oder fetthaltigen Stoffen ein pH-Wert des Abwassers im sauren Bereich, also kleiner als pH 7, eingehalten wird, und dass in dieser Zone unten eine Schlammschicht (29), oben eine Schicht fetthaltiger Teilchen (31) und dazwischen eine Reaktionszone (30) ausgebildet wird, wobei Abwasser, aus dem Fett abgeschieden worden ist, aus dem Bereich der Reaktionszone (30) abgezogen wird.

2. Verfahren nach Anspruch 1, **dadurch gekennzeichnet, dass** in der Zone der Fettabscheidung ein pH-Wert von 4 bis 5 eingehalten wird.

3. Verfahren nach Anspruch 1 oder 2, **dadurch gekennzeichnet, dass** die Zone der Fettabscheidung in zwei Bereiche (28 und 33) unterteilt wird, zwischen denen im Bereich der Reaktionszone (30) eine schräg nach oben gerichtete Strömung von Abwasser ausgebildet wird.

4. Verfahren nach Anspruch 3, **dadurch gekennzeichnet, dass** sich im Wasser der Reaktionszone (30) enthaltene Teilchen im Bereich der schräg nach oben gerichteten Strömung zu größeren Teilchen zusammenballen.

5. Verfahren nach Anspruch 4, **dadurch gekennzeichnet, dass** die zu größeren Teilchen zusammengeballten Teilchen im Bereich der schräg nach oben gerichteten Strömung zur Schlammschicht (29) absinken bzw. zur Fettschicht (31) bzw. aufsteigen.

6. Verfahren nach einem der Ansprüche 1 bis 5, **dadurch gekennzeichnet, dass** Abwasser aus dem Bereich (33) der Fettabscheidezone von einem unterhalb der Fettschicht (31) liegenden Punkt in einer nach oben gerichteten Strömung abgezogen wird.

7. Vorrichtung zum Durchführen des Verfahrens nach einem der Ansprüche 1 bis 6 mit einem Behälter (21) mit zwei Kammern (28,33), mit einem Zulauf (24,25) in die erste Kammer (28), mit einem Ablauf (26,27) aus der zweiten Kammer (33) und mit einem zwischen den Kammern (28,33) angeordneten Schrägklärer (32) aus mehreren zur lotrechten, schräggestellten Platten, **dadurch gekennzeichnet, dass** der Eintritt von Abwasser aus der ersten Kammer (28) in den Schrägklärer (32) am unteren Ende desselben angeordnet ist, dass der Austritt aus dem Schrägklärer (32) in die zweite Kammer (33) am oberen Ende desselben angeordnet ist, und dass der Schrägklärer (32) zwischen einer im Behälter (21) von oben nach unten ragenden, die Kammern (28 und 33) voneinander trennenden Wand (34) und einer im Behälter (21) von unten nach oben ragenden Wand (35), welche die Kammern (28 und 33) voneinander trennt, angeordnet ist.

8. Vorrichtung nach Anspruch 7, **dadurch gekennzeichnet, dass** der Schrägklärer (32) mehrere zueinander parallel ausgerichtete Platten aufweist.

9. Vorrichtung nach Anspruch 8, **dadurch gekennzeichnet, dass** die Platten des Schrägklärers (32) aus Kunststoff, insbesondere lipophilem Kunststoff, bestehen.

10. Vorrichtung nach Anspruch 8 oder 9, **dadurch gekennzeichnet, dass** die Platten des Schrägklärers (32) zu Paketen aus jeweils mehreren, zueinander parallel ausgerichteten Platten zusammengefasst sind.

11. Vorrichtung nach einem der Ansprüche 8 bis 10, **dadurch gekennzeichnet, dass** die Platten des Schrägklärers (32) voneinander einen Abstand in der Größenordnung von bis zu 15 mm, vorzugsweise 5 mm, haben.
